# EUROPÄISCHE PATENTSCHRIFT

(11) **EP 2 867 095 B1**
(45) Veröffentlichungstag und Bekanntmachung des Hinweises auf die Patenterteilung: **30.03.2016**
(21) Anmeldenummer: 13732550.2
(22) Anmeldetag: 01.07.2013
(51) Int. Cl.: B62D 7/15, B66F 9/075

(54) **LENKSYSTEM FÜR EIN FAHRZEUG SOWIE LENKVERFAHREN EINES FAHRZEUGS**
STEERING SYSTEM FOR A VEHICLE AND STEERING METHOD FOR A VEHICLE
SYSTÈME DE DIRECTION DE VÉHICULE AINSI QUE PROCÉDÉ DE DIRECTION D'UN VÉHICULE

(30) Priorität: 02.07.2012 DE 102012105831
(43) Veröffentlichungstag der Anmeldung: 06.05.2015
(73) Patentinhaber: Hubtex Maschinenbau GmbH & Co. Kg, 36041 Fulda (DE)
(72) Erfinder: OTTERBEIN, Achim, 36137 Großenlüder (DE)
(74) Vertreter: Kluin, Jörg-Eden
(86) Internationale Anmeldenummer: PCT/EP2013/063795
(87) Internationale Veröffentlichungsnummer: WO 2014/005977

(56) Entgegenhaltungen:
- WO-A1-2004/007266
- DE-A1- 4 203 867
- DE-U1- 20 117 198

## Beschreibung

Die Erfindung betrifft ein Lenksystem für ein Fahrzeug mit mindestens zwei unabhängig voneinander lenkbaren Rädern und einem die Räder nach einem Lenkprogramm lenkenden Lenksollwertgeber sowie ein Lenkverfahren eines Fahrzeugs.

Das Lenksystem ist insbesondere vorgesehen für ein Mehrwegetransportfahrzeug, welches dem Transport von Waren, insbesondere in Werkshallen oder auf Werkgeländen, dient. Es kann Einrichtungen für das Aufnehmen und Absetzen der Waren umfassen. Bei diesen Einrichtungen kann es sich um eine an einem Mast heb- und senkbar angeordnete Transportgabel oder um eine an die zu transportierende Ware angepasste Einrichtung handeln.

Um diese Transportfahrzeuge insbesondere in Werkshallen, in denen meist verhältnismäßig wenig Platz zur Verfügung steht, benutzen zu können, sind sie als sogenannte Mehrwegefahrzeuge ausgebildet, bei denen sämtliche ihrer mindestens zwei, vorzugsweise drei, vier oder auch mehr Radsätze gelenkt sind und zumindest einer dieser Radsätze auch drehangetrieben ist.

Die einzelnen Radsätze können aus einem einzelnen oder auch aus mehreren, beispielsweise paarweise angeordneten Rädern bestehen, wobei letzteres insbesondere dann vorteilhaft ist, wenn das Transportfahrzeug für relativ schwere Lasten eingesetzt werden soll.

Zur Koordination der Lenkwinkel der gelenkten Radsätze umfassen diese Mehrwegetransportfahrzeuge regelmäßig ein Lenksystem, welches beispielsweise die folgenden verschiedenen Lenkprogramme umfassen kann, zwischen denen sowohl in Längsfahrt, als auch in um einen Winkel von 90° hierzu versetzter Querfahrt die Bedienperson auswählen kann:
- Positionierung sämtlicher Räder in Längs- oder Querrichtung, d.h. das Transportfahrzeug bewegt sich in Längs- oder Querrichtung geradeaus.
- Allradlenkung, d.h. sämtliche gelenkten Räder werden bei Betätigung der Lenkung mittels eines Steuerorgans gelenkt, so dass sich eine korrekte Lenkgeometrie ergibt, was bedeutet, dass sich die Drehachsen sämtlicher Räder in einem Punkt - dem sogenannten Lenkpunkt oder Lenkpol- schneiden.
- Diagonallenkung, d.h. die Räder werden aus ihrer Längs- oder Querrichtung bei einem Lenkvorgang in demselben Drehsinn gelenkt, so dass der Lenkpol - wie auch bei reiner Längs- oder Querfahrt - sich im Unendlichen befindet.
- Vorder- bzw. Hinterachslenkung, d.h. die auf die jeweilige Fortbewegungsrichtung bezogen vorn bzw. hinten angeordneten Räder werden gelenkt, vorzugsweise wiederum Lenkpol bezogen.

Ferner kann das Lenksystem noch Sonderlenkprogramme umfassen, wie beispielsweise zur Karusselfahrt, wobei die Räder so gelenkt werden, dass sich das Fahrzeug um eine vertikale Achse im Kreis dreht, oder zum Parken, wobei zwecks Vermeidung des Wegrollens des Fahrzeugs die Drehachsen zumindest eines Teiles der Räder senkrecht zueinander ausgerichtet werden.

Zwischen den einzelnen Lenkprogrammen kann während der Fahrt gewechselt werden. Hierdurch kann der Fahrer das Transportfahrzeug beispielsweise nach dem Verlassen eines Langgut-Regalganges, bei dem es regelmäßig in Geradeauspositionierung der Räder betrieben wird, zur Umschaltung beispielsweise auf Allradlenkung nicht anzuhalten braucht, was eine erhebliche Zeitersparnis mit sich bringt.

Nachteilig ist bei dem aus der DE 201 17 198 U1 bekannten Lenksystem, dass der Wechsel des Lenkprogramms während der Fahrt zu recht abrupten Richtungsänderungen führen kann, die für eine Bedienperson recht schwer kontrollierbar sind.

Aus der EP 1 657 140 B1 ist ein Lenksystem für ein Transportfahrzeug bekannt, welches unabhängig von konkreten Lenkprogrammen in einer möglichst variablen und somit rangierfreundlichen Weise gelenkt werden kann.

Hierzu umfasst dieses Lenksystem neben dem Lenksollwertgeber - beispielsweise einem Lenkrad - ein erstes weiteres Bedienelement zur kontinuierlichen Verschiebung der Lenklinie und ein weiteres zweites Bedienelement zur kontinuierlichen Steuerung der Hauptrichtung des Fahrzeugs. Aufgrund dieser Maßnahme soll ein Lenksystem geschaffen sein, mit welchem eine intuitive Lenkung zur Erhöhung der Flexibilität des Lenksystems führen soll.

Nachteilig ist bei diesem Lenksystem jedoch, dass es aufgrund der insgesamt drei Lenksollwertgeber einer erheblichen Übung des Bedienpersonals bedarf, ein mit diesem Lenksystem ausgestattetes Fahrzeug ausreichend präzise lenken zu können.

Aus der WO 2004/007266 A1 ist ein allradgelenktes Fahrzeug bekannt, bei dem eine Regeleinrichtung vorgesehen ist, die mit der Fähigkeit ausgebildet ist, auf eine Anforderung eines Richtungswechsels des Fahrzeugs in der horizontalen Ebene eine Position des Drehpunktes für das Fahrzeug irgendwo in der horizontalen Ebene anzuordnen.

Die DE 42 03 867 A1 zeigt ein allradgelenktes Fahrzeug mit einem Lenkrad, mit dem, wie gewohnt, der Krümmungsradius und damit der Abstand des Momentandrehpunkts vom Fahrzeug gesteuert werden kann. Zudem ist die Möglichkeit vorgesehen, dass die Momentantangente durch ein weiteres Lenkrad relativ zur Fahrzeughauptachse verändert wird.

Die DE 201 17 198 U1 offenbart es, ein Fahrzeug mit Sensoren auszustatten, die eine vorgegebene Fahrspur detektieren, wobei mittels eines Lenkprogramms die Räder des Fahrzeugs so gelenkt werden, dass dieses der Fahrspur bestmöglich folgt.

Der Erfindung liegt die Aufgabe zugrunde, ein Lenksystem für ein Fahrzeug zu schaffen, welches einen sehr variablen und intuitiven Lenkvorgang ermöglicht.

Diese Aufgabe wird durch das in Anspruch 1 wiedergegebene Lenksystem sowie durch das in Anspruch 8 wiedergegebene Lenkverfahren gelöst.

Bei dem erfindungsgemäßen Lenksystem ist ein Bedienelement vorgesehen, mittels welchem das Fahrzeug während der Fahrt in eine Rotation um einen Drehpol versetzbar ist. Dabei soll die Rotation nicht etwa bei ansonsten still stehendem, d.h. keine Fahrstrecke absolvierenden Fahrzeug erfolgen, was einer üblichen "Karusselfahrt" entsprechen würde, sondern bei in Fahrt befindlichem Fahrzeug. Nach Einleitung der Rotation um den Drehpol bewegt sich somit letzterer ausschließlich in Fahrtrichtung, wohingegen sich die Fahrzeugteile, die sich außerhalb des Drehpols befinden, in Richtungen bewegen, die sich durch eine Vektoraddition des Bewegungsvektors des Drehpols - auch "Hauptbewegungsvektor" genannt - und des Richtungsvektors an dem jeweiligen Ort aufgrund einer Karusselfahrt um den Drehpunkt ergibt.

Mit dem Begriff "Drehpol" ist im Rahmen dieser Druckschrift also insbesondere nicht der Lenkpol des Fahrzeugs bezeichnet, in dem sich die Drehachsen sämtlicher Räder schneiden. Der Begriff "Drehpol" bezeichnet im Rahmen dieser Druckschrift insbesondere den Drehpunkt der von der - wenn auch gekrümmten - Translationsbewegung gedanklich isolierten Rotation des Fahrzeugs.

Mit einer - wenn auch gekrümmten - Translationsbewegung wird im Rahmen dieser Druckschrift insbesondere eine Bewegung des Fahrzeugs bezeichnet, bei der sich alle Punkte des Fahrzeugs in dieselbe Richtung entlang einer Bahn bewegen, bei der sich die Richtung der Hauptachse des Fahrzeugs also nicht ändert.

Das Lenkprogramm dieses Lenksystems ist derart ausgebildet, dass mittels des Lenksollwertgebers - beispielsweise einem Lenkrad - die Richtung des Hauptbewegungsvektors des Drehpols veränderbar ist.

Mittels des Lenksollwertgebers ist also bevorzugt die Bahn der - wenn auch gekrümmten - Translationsbewegung des Fahrzeugs steuerbar.

Mit Vorteil ist ein Bedienelement oder eine Funktion eines Bedienelements vorgesehen (bevorzugt genau ein Bedienelement bzw. genau eine Funktion eines Bedienelements) mittels welchem bzw. welcher - bevorzugt ausschließlich - das Fahrzeug während der Fahrt in eine Rotation um einen Drehpol versetzbar ist. Das Versetzen des Fahrzeugs während der Fahrt in eine Rotation um einen Drehpol ist also bevorzugt isoliert ansteuerbar.

Bevorzugt erfolgt, wenn das Bedienelement, mittels welchem das Fahrzeug während der Fahrt in eine Rotation um einen Drehpol versetzbar ist, nicht betätigt wird, keine derartige Rotation des Fahrzeugs. Auch bei einer Richtungsänderung des Hauptbewegungsvektors bleibt das Fahrzeug dann immer gleich zur Umgebung ausgerichtet, die Richtung seiner Hauptachse zur Umgebung ändert sich also nicht.

Es ist denkbar, dass ein anwählbares Lenkprogramm vorgesehen ist, welches die Hauptachse des Fahrzeugs bei einer Richtungsänderung des Hauptbewegungsvektors automatisch in die neue Richtung des Hauptbewegungsvektors ausrichtet, solange das Bedienelement, mittels welchem das Fahrzeug während der Fahrt in eine Rotation um einen Drehpol versetzbar ist, nicht betätigt wird. Das Lenkverhalten entspricht oder ähnelt dann dem eines gewöhnlichen Kfz.

Mit dem erfindungsgemäßen Lenksystem ergeben sich für die Bedienperson vollkommen neue Lenkmöglichkeiten des Fahrzeugs, da mit Hilfe des Lenkrades Richtungsänderungen der Bewegung des Drehpols - mit anderen Worten: Richtungsänderungen des Hauptbewegungsvektors - bewirkt werden, wohingegen sich das Fahrzeug hierbei um den Drehpol drehen kann. Anders ausgedrückt können gewünschte Bewegungen des Fahrzeugs auf vollkommen neue Art gelenkt werden.

Erfolgt diese Drehung um den Drehpol relativ langsam, d.h. mit einer Drehgeschwindigkeit, die es der Bedienperson ermöglicht, gleichwohl die durch den Hauptbewegungsvektor charakterisierte Fahrtrichtung zu erfassen und zu lenken, so ist der Lenkvorgang mit dem neuen Lenksystem mit einiger Übung gut beherrschbar. Erleichtern lässt sich der Lenkvorgang insbesondere mit zunehmender Drehgeschwindigkeit um den Drehpol, wenn das Fahrzeug einen Lenkstand oder eine Lenkkabine umfasst, die stets im selben Winkel zur Fahrtrichtung verweilt, mit anderen Worten: unter der sich das Fahrzeug hindurch dreht.

Bei einer ersten Variante des erfindungsgemäßen Lenksystems ist mit Hilfe des Bedienelements lediglich die Drehbewegung um den Drehpol erzeugbar oder abbrechbar, wobei der Drehpol relativ zur Projektionsfläche des Fahrzeugs eine feste Position einnimmt. Diese kann sich sowohl außerhalb der senkrechten Projektionsfläche des Fahrzeugs, als auch innerhalb derselben, beispielsweise mit dem geometrischen Schwerpunkt der senkrechten Projektionsfläche zumindest in etwa zusammenfallend, vorgesehen sein.

Es ist jedoch ebenfalls möglich, das Bedienelement und das Lenkprogramm derart auszubilden, dass die Position des Drehpols relativ zu dieser Projektionsfläche des Fahrzeugs verlagerbar ist. Aufgrund dieser Weiterbildung lassen sich ganz besondere Rangierbewegungen des Fahrzeugs erzeugen.

Es ist ein Bedienelement oder eine Funktion eines Bedienelements vorgesehen (bevorzugt genau ein Bedienelement bzw. genau eine Funktion eines Bedienelements) mittels welchem bzw. welcher ausschließlich die Position des Drehpols relativ zu dieser Projektionsfläche des Fahrzeugs verlagerbar ist.

Das Verlagern der Position des Drehpols relativ zu dieser Projektionsfläche des Fahrzeugs ist also bevorzugt isoliert ansteuerbar. Es hat sich gezeigt, dass dies der intuitiven Bewegungsvorstellung eines Fahrers bestmöglich entspricht.

Die Verlagerung der Position des Drehpols kann darüber hinaus auch umgebungssensitiv, beispielsweise durch im Boden eingelassene Sollwertgeber, von welchen das Lenkprogramm über geeignete Sensoren entsprechende Informationen erhält, oder beispielsweise durch optoelektronische Erfassung von Umgebungsmarken mit Hilfe von hierzu geeigneten Sensoren erzeugt werden.

Das Lenkprogramm kann derart ausgebildet sein, dass der Drehwinkel um den Drehpol abhängig von der Länge des Hauptbewegungsvektors ist. Hiermit ist gemeint, dass die Drehzahl um den Drehpol mit der Geschwindigkeit, mit der der Drehpol bewegt wird, zu- oder abnimmt, beispielsweise derart, dass unabhängig von der Fahrgeschwindigkeit das Fahrzeug an einer bestimmten Position der Bahn, entlang der die Fahrbewegung erfolgt, stets eine bestimmte Ausrichtung aufweist.

Besonders bevorzugt ist es, wenn die Abhängigkeit zwischen Drehwinkel um den Drehpol von der Länge des Hauptbewegungsvektors variierbar ist. So lässt sich beispielsweise bei einer Beschleunigung der Bewegung des Drehpols hierzu relativ die Drehbewegung verlangsamen, um nicht für die Bedienperson unbeherrschbare Fahrzustände zu erhalten.

Auch kann die Abhängigkeit zwischen dem Drehwinkel um den Drehpol von der Länge des Hauptbewegungsvektors umgebungssensitiv, wiederum beispielsweise durch die Erfassung von im Boden eingelassenen Sollwertgebern mit geeigneten Sensoren, oder auch durch optoelektronische Erfassung von Umgebungsmarken durch das Lenksystem, unter Berücksichtigung der Änderung des Hauptbewegungsvektors, selbsttätig erfolgen.

Die Erfindung umfasst auch ein Lenkverfahren eines Fahrzeugs, bei welchem sämtliche Räder des Fahrzeugs derart gelenkt werden, dass das Fahrzeug während der Fahrt in eine Rotation um einen Drehpol, der sich mit einem Hauptbewegungsvektor bewegt, versetzt wird und die Richtung des Hauptbewegungsvektors des Drehpols verändert wird.

Bevorzugt wird eine Verlagerung der Position des Drehpols relativ zu dieser Projektionsfläche des Fahrzeugs isoliert angesteuert.

Die Erfindung soll nun anhand der beigefügten Zeichnungen weiter erläutert werden. Es zeigen:
- Fig. 1: - schematisch - ein Mehrwegetransportfahrzeug am Beispiel eines Mehrwegestaplers in einer Ansicht von oben;
- Fig. 2: eine Prinzipdarstellung des bei einem erfindungsgemäßen Mehrwegetransportfahrzeug vorgesehenen Steuersystems;
- Fig. 3 a) bis c): - schematisch - verschiedene, mit dem erfindungsgemäßen Lenksystem bewirkbare Bewegungsabläufe des Mehrwegetransportfahrzeugs sowie
- Fig. 4: den Lenkwinkel eines Rades bestimmenden Vektoren bei einer Bewegung des Mehrwegetransportfahrzeugs mit dem erfindungsgemäßen Lenksystem.

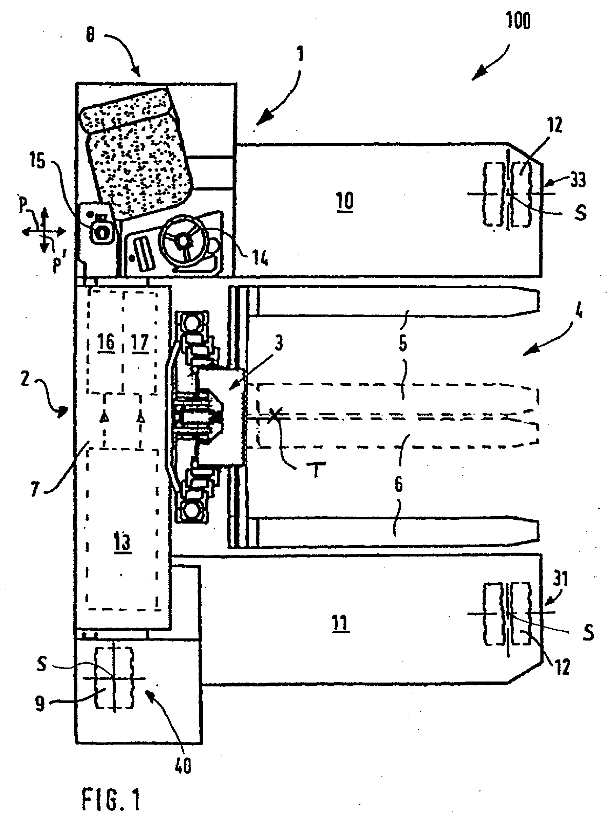

Das in Fig. 1 als Ganzes mit 100 bezeichnete Mehrwegetransportfahrzeug, hier als Mehrwegestapler ausgebildet, umfasst ein in Aufsicht etwa U-förmiges Fahrgestell. Es trägt auf dem Querbalken 2 des U einen aufrecht stehenden Mast 3, an dem heb- und senkbar eine Gabelanordnung 4 angeordnet ist. Letztere ist derart ausgestaltet, dass ihre Zinken 5, 6 zwischen einer entfernten, in Fig. 1 durchgezogen dargestellten Position und einer benachbarten, in Fig. 1 gestrichelt dargestellten Position verlagerbar sind, um so ihren Abstand an die jeweils zu transportierenden Waren anpassen zu können.

Auf dem Querbalken 2 des U ist ferner ein Gehäuse 7 angeordnet, das einen Großteil der zum Betrieb des Mehrwegetransportfahrzeugs 100 benötigten Aggregate und Einrichtungen sowie eine Batterieanordnung 13 aufnimmt.

Gemäß Fig. 1 unten und oben an dem Querbalken 2 - letzteres durch die Darstellung eines Steuerstandes 8 verdeckt - ist jeweils ein Rad 9 angedeutet, welches durch einen in der Zeichnung nicht dargestellten Motor angetrieben ist. An den in Fig. 1 sich von dem Querbalken 2 nach rechts erstreckenden Segmenten 10, 11 des Fahrgestells 1 sind jeweils im Endbereich Radanordnungen 12 vorgesehen, die bei dem dargestellten Ausführungsbeispiel als Zwillingsräder ausgebildet sind.

Sämtliche Räder und Radanordnungen 9, 12 sind um eine senkrecht zur Zeichenebene verlaufende Lenkachse S um einen Lenkwinkel von zumindest 180° lenkbar angeordnet.

Der in Fig. 1 am oberen Ende des Querbalkens 2 dargestellte Steuerstand 8 enthält die zum Betrieb des Mehrwegetransportfahrzeugs 100 von einer Bedienperson (nicht dargestellt) zu betätigenden Bedienungseinrichtungen, zu denen ein Lenkrad 14 und ein als von der Bedienperson aus gesehen nach links oder rechts verschwenkbarer Joystick (wie durch die Pfeile P in Fig. 1 verdeutlicht werden soll) ausgebildetes Bedienelement 15 zählen, die der Ansteuerung der in der Zeichnung nicht näher dargestellten, herkömmlich ausgebildeten Lenkeinrichtungen über ein zentrales Steuersystem 18 dienen, wie im weiteren noch beschrieben werden wird.

Ferner umfasst der Steuerstand eine nicht näher dargestellte Einrichtung - beispielsweise ein "Gaspedal" - die den Sollwert für die Antriebsleistung der in der Zeichnung nicht dargestellten Fahrmotoren vorgibt, die von Steuereinheiten 16, 17 bereitgestellt wird.

Bei dem in Fig. 1 dargestellten Ausführungsbeispiel des Mehrwegetransportfahrzeugs 100 ist der Steuerstand 8 bezüglich des Fahrgestells 1 feststehend ausgebildet. Es ist jedoch ebenfalls möglich, den Steuerstand 8 bezüglich des Fahrgestells 1 rotierbar auszubilden, derart, dass die Bedienperson bezüglich der Fahrtrichtung, die durch einen Hauptbewegungsvektor charakterisiert werden kann und wie weiter unten noch im Einzelnen dargestellt werden wird, stets eine bestimmte Position einnehmen kann.

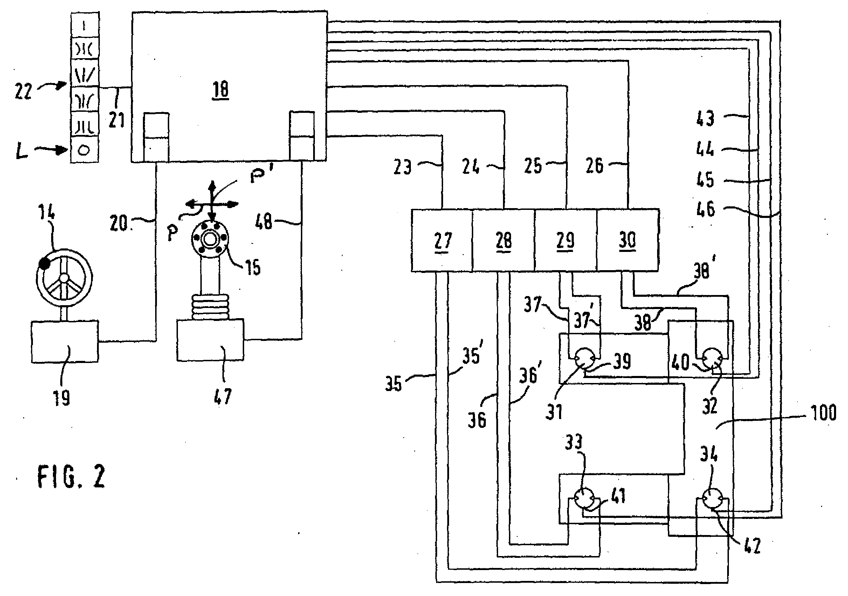

Wie in Fig. 2 verdeutlicht, ist das Lenkrad 14 mit einem Lenksollwertgeber 19 verbunden, der die Position des Lenkrades 14 in korrelierte elektrische Signale umwandelt. Letztere werden über eine elektrische Leitung 20 dem zentralen Steuersystem 18 zugeführt. Dieses wandelt in Abhängigkeit des jeweils mittels einer über eine Leitung 21 mit dem Steuersystem 18 verbundenen Tastatur 22 vorgegebenen Lenkprogramms die von dem Lenksollwertgeber 19 empfangenen Daten in Signale um, die über Leitungen 23, 24, 25, 26 hydraulischen Ventilen 27, 28, 29, 30 zwecks Betätigung der Lenkeinrichtungen 31, 32, 33, 34 der Radsätze des Mehrwegetransportfahrzeugs 100 zugeführt werden.

Jede der Lenkeinrichtungen 31, 32, 33, 34 umfasst einen Hydromotor, der über zwei Hydraulikleitungen 35, 35'; 36, 36'; 37, 37'; 38, 38' mit den hydraulischen Ventilen 27, 28, 29, 30 verbunden ist und je nach von dem Steuersystem 18 vorgegebenen Solllenkwinkeln mit Hydraulikflüssigkeit beaufschlagt wird.

Jede der im übrigen in herkömmlicher Weise ausgestalteten Lenkeinrichtungen 31, 32, 33, 34 umfasst Lenkwinkelsensoren 39, 40, 41, 42, die über elektrische Leitungen ein mit dem jeweiligen Ist-Lenkwinkel korreliertes elektrisches Signal dem Steuersystem 18 zur Verfügung stellen, so dass eine Regelung der Lenkeinrichtungen 31, 32, 33, 34 im engeren Sinne erfolgt.

Über einen Signalgeber 47 und eine elektrische Leitung 48 ist des Weiteren das als Joystick ausgebildete Bedienelement 15 mit dem Steuersystem 18 verbunden.

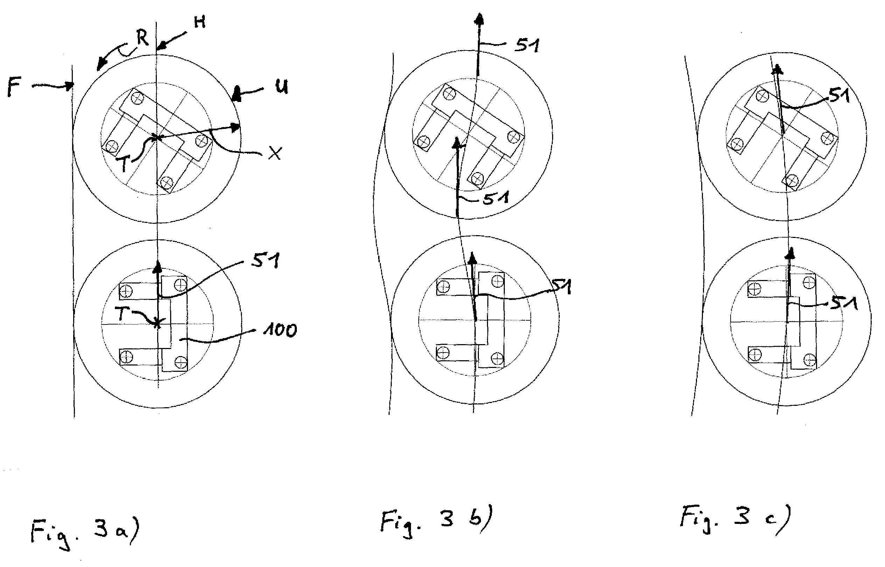

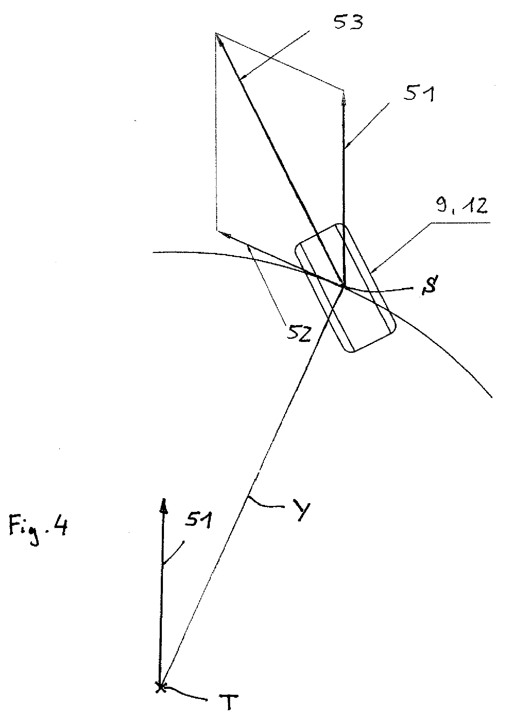

Ist das in Fig. 2 mit einem Kreis symbolisierte, mit L bezeichnete Lenkprogramm, welches das erfindungsgemäße Lenksystem charakterisiert, ausgewählt, so kann durch Betätigung des Bedienelements 15 nach links und rechts gemäß des Pfeiles P das Mehrwegetransportfahrzeug in Rotation gegen oder im Uhrzeigersinn um einen Drehpol T versetzt werden, und zwar unter Beibehaltung der Fahrtrichtung des Fahrzeugs, die durch den Hauptbewegungsvektor 51 (s. insbesondere Fig. 3 und Fig. 4) charakterisiert ist.

Bei dem in der Zeichnung dargestellten Ausführungsbeispiel fällt der Drehpol T zumindest in etwa zusammen mit dem geometrischen Schwerpunkt der senkrechten Projektionsfläche des Mehrwegetransportfahrzeugs 100. Hierdurch wird der Raum, den das Mehrwegetransportfahrzeug 100 bei der Fahrt mit dem erfindungsgemäßen Lenksystem benötigt, minimiert. Bei dem in der Zeichnung dargestellten Ausführungsbeispiel ist es jedoch ebenfalls möglich, den Drehpol T parallel zur Längserstreckung der Segmente 10, 11 zu verlagern, wenn die mit dem Mehrwegetransportfahrzeug 100 zu erbringende Rangiertätigkeit eine Rotation und einen von dem geometrischen Schwerpunkt entfernten Drehpol vorteilhaft erscheinen lässt. Die Verlagerung des Drehpols T erfolgt bei dem in der Zeichnung dargestellten Ausführungsbeispiel durch Verkippen des Bedienelements 15 gemäß des Pfeiles P'.

Es ist also genau eine Funktion eines Bedienelements vorgesehen (nämlich das Verkippen des Bedienelements 15 gemäß des Pfeils P'), mittels welcher ausschließlich die Position des Drehpols relativ zu der senkrechten Projektionsfläche des Fahrzeugs verlagerbar ist. Die Position des Drehpols kann also isoliert angesteuert werden.

Bei dem erfindungsgemäßen Lenksystem kann auch während einer Rotation des Mehrwegetransportfahrzeugs 100 um den Drehpol T die Ausrichtung des Hauptbewegungsvektors 51, d.h. die Hauptbewegungsrichtung geändert werden. Durch einen Lenkradauschlag nach links wird beispielsweise der Hauptbewegungsvektor 51 nach links gekippt, wodurch das Fahrzeug einen Linksbogen fährt, welchem die Rotationsbewegung um den Drehpol T überlagert ist, bei einem Lenkradausschlag nach rechts einen entsprechenden Rechtsbogen.

Verschiedene Bewegungsabläufe sind beispielhaft in den Fig. 3a) bis 3c) verdeutlicht.

Bei dem Bewegungsablauf gemäß Fig. 3a) ist die Hauptbewegungsrichtung H eine Gerade. Das Lenkrad 14 befindet sich in seiner Geradeausstellung. Während dieser Geradeausfahrt vollzieht das Mehrwegefahrzeug 100 eine Rotation gegen den Uhrzeigersinn, symbolisiert durch den Pfeil R. Diese Rotation wird eingeleitet durch eine Betätigung des Bedienelements 15 gemäß des Pfeiles P nach links. Das Fahrzeug 100 führt bei der in Fig. 3a) dargestellten Fahrt eine Bewegung durch, bei welcher der Hauptbewegungsvektor 51 mit der Hauptbewegungsrichtung H zusammenfällt. Gleichzeitig rotiert das Fahrzeug um den Drehpol T in einer Weise, als würde es einen kreisförmigen Außenumfang U aufweisen, der an einer parallel zur Hauptbewegungsrichtung H verlaufenden Fläche F abrollt. Die Drehgeschwindigkeit, mit welcher sich das Mehrwegetransportfahrzeug 100 um den Drehpol T bei einer Fahrt in Hauptbewegungsrichtung H dreht, lässt sich durch den Radius X des Kreises mit dem Außenumfang U verdeutlichen: Eine Erhöhung der Drehzahl relativ zu der in Hauptbewegungsrichtung H zurückgelegten Strecke entspricht einer Reduzierung des Radius X, eine Reduzierung der Drehzahl entsprechend einer Vergrößerung desselben. Das Bedienelement 15 kann zur Änderung der Drehgeschwindigkeit um den Drehpol T relativ zu der in Hauptbewegungsrichtung H zurückgelegten Strecke ein weiteres, in der Zeichnung nicht dargestelltes Stellglied umfassen. Oder es ist so ausgebildet, dass die Drehzahl relativ zur Hauptbewegungsrichtung abhängig ist von der Auslenkung aus einer Neutrallage.

Bei dem in Fig. 3b) dargestellten Bewegungsablauf wird mit dem Bedienelement 15 das Mehrwegetransportfahrzeug 100 in derselben Weise betätigt, wie bei dem Bewegungsablauf gemäß Fig. 3a). Jedoch wird mit dem Lenkrad 14 das Mehrwegetransportfahrzeug in einer Links-Rechts-Links-Schlangenlinie gesteuert, so dass sich die Richtung des Hauptbewegungssensors 51 von einer Geradeausfahrt kontinuierlich zunächst nach links, dann nach rechts und schließlich wieder zurück in die Geradeausfahrt ändert.

Bei dem in Fig. 3c) beispielhaft dargestellten Bewegungsablauf beschreibt die Hauptbewegungsrichtung H einen Linksbogen. Das Lenkrad 14 befindet sich in einem Ausschlag aus der Neutralstellung nach links, das Bedienelement 14 in derselben Position wie bei den beiden anderen Bewegungsabläufen gemäß Fig. 3a) und 3b).

Um derartige Bewegungsabläufe realisieren zu können, werden die Räder 9 und Radanordnungen 12 unter Berücksichtigung der anhand von Fig. 4 verdeutlichten Größen gelenkt:
Zunächst ist die Hauptbewegungsrichtung maßgeblich, welche durch die Richtung des Hauptbewegungsvektors 51 bestimmt ist. Dessen Länge ist ein Maß für die Geschwindigkeit des Mehrwegetransportfahrzeugs 100 in die Hauptbewegungsrichtung.

Führt das Mehrwegetransportfahrzeug 100 eine dieser Hauptbewegungsrichtung überlagerte Rotation um den Drehpol T durch der um den Radius Y von der Lenkachse S des Rades 9 oder der Radanordnung 12 entfernt ist, so müssen das Rad 9 oder die Radanordnung 12 in einen Lenkwinkel gebracht werden, der die durch die Rotation hervorgerufene Bewegungskomponente berücksichtigt, die durch den tangentialen Bewegungsvektor 52, welcher tangential an dem Kreis mit dem Radius Y am Orte der Lenkachse S anliegt, bestimmt ist. Dessen Länge ist ein Maß für die Drehgeschwindigkeit. Der Lenkwinkel, den das Rad 9 oder die Radanordnung 12 hierzu annehmen müssen, wird bestimmt durch den resultierenden Radrichtungsvektor 53. Dessen Länge ist wiederum ein Maß für die Geschwindigkeit, mit welcher sich das Rad 9 oder die Radanordnung 12 in diesem Augenblick bewegt. Sind das Rad 9 oder die Radanordnung 12 drehangetrieben, so ist durch die Länge des Radrichtungsvektors 53 die Drehzahl, mit welcher das Rad 9 oder die Radanordnung 12 angetrieben werden müssen, bestimmbar.

### Bezugszeichenliste:

- 100: Mehrwegetransportfahrzeug
- 1: Fahrgestell
- 2: Querbalken
- 3: Mast
- 4: Gabelanordnung
- 5: Zinke
- 6: Zinke
- 7: Gehäuse
- 8: Steuerstand
- 9: Rad
- 10: Segment
- 11: Segment
- 12: Radanordnungen
- 13: Batterieanordnung
- 14: Lenkrad
- 15: Bedienelement
- 16: Steuerelement
- 17: Steuerelement
- 18: Steuersystem
- 19: Lenkgeber
- 20: Leitung
- 21: Leitung
- 22: Tastatur
- 23: Leitung
- 24: Leitung
- 25: Leitung
- 26: Leitung
- 27: Ventil
- 28: Ventil
- 29: Ventil
- 30: Ventil
- 31: Radsatz
- 32: Radsatz
- 33: Radsatz
- 34: Radsatz
- 35, 35': Hydraulikleitung
- 36, 36': Hydraulikleitung
- 37, 37': Hydraulikleitung
- 38, 38': Hydraulikleitung
- 39: Lenkwinkelsensor
- 40: Lenkwinkelsensor
- 41: Lenkwinkelsensor
- 42: Lenkwinkelsensor
- 43: Leitung
- 44: Leitung
- 45: Leitung
- 46: Leitung
- 47: Signalgeber
- 48: Leitung
- 51: Hauptbewegungsvektor
- 52: Richtungsvektor
- 53: Radrichtungsvektor
- F: Fläche
- H: Hauptbewegungsrichtung
- L: Lenkprogramm
- P, P': Pfeile
- R: Pfeil
- S: Lenkachse
- T: Drehpol
- X: Radius
- Y: Radius

## Patentansprüche

1. Lenksystem für ein Fahrzeug (100), mit mindestens zwei unabhängig voneinander lenkbaren Rädern (9, 12) und einem die Räder (9, 12) nach einem Lenkprogramm (L) lenkenden Lenksollwertgeber (19),
wobei ein Bedienelement (15) vorgesehen ist, mittels welchem das Fahrzeug (100) während der Fahrt in eine Rotation um einen Drehpol (T), der sich mit einem Hauptbewegungsvektor (51) bewegt, versetzbar ist, und
das Lenkprogramm (L) derart ausgebildet ist, dass mittels des Lenksollwertgebers (19) die Richtung des Hauptbewegungsvektors (51) des Drehpols (T) veränderbar ist, wobei die Position des Drehpols (T) relativ zur senkrechten Projektionsfläche des Fahrzeugs (100) verlagerbar ist, wobei ein Bedienelement (15) oder eine Funktion eines Bedienelements (15) vorgesehen ist, mittels welchem bzw. welcher ausschließlich die Position des Drehpols (T) relativ zur Projektionsfläche des Fahrzeugs (100) verlagerbar ist.

2. Lenksystem nach Anspruch 1, **dadurch gekennzeichnet, dass** die Verlagerung der Positionen des Drehpols (T) umgebungssensitiv, beispielsweise durch optoelektronische Erfassung von Umgebungsmarken durch das Lenksystem erfolgt.

3. Lenksystem nach Anspruch 1 oder 2, **dadurch gekennzeichnet, dass** der Drehpol (T) sich innerhalb der senkrechten Projektionsfläche des Fahrzeugs befindet.

4. Lenksystem nach einem der Ansprüche 1 bis 3, **dadurch gekennzeichnet, dass** der Drehwinkel um den Drehpol (T) abhängig von der Länge des Hauptbewegungsvektors (51) ist.

5. Lenksystem nach Anspruch 4, **dadurch gekennzeichnet, dass** die Abhängigkeit zwischen dem Drehwinkel um den Drehpol (T) von der Länge des Hauptbewegungsvektors (51) variierbar ist.

6. Lenksystem nach Anspruch 5, **dadurch gekennzeichnet, dass** die Abhängigkeit zwischen dem Drehwinkel um den Drehpunkt (T) von der Länge des Hauptbewegungsvektors (51) durch das Bedienelement (15) variierbar ist.

7. Lenksystem nach Anspruch 5 oder 6, **dadurch gekennzeichnet, dass** die Abhängigkeit zwischen dem Drehwinkel um den Drehpol (T) von der Länge des Hauptbewegungsvektors (51) umgebungssensitiv, beispielsweise durch optoelektronische Erfassung von Umgebungsmarken durch das Lenksystem, unter Berücksichtigung der Änderung des Hauptbewegungsvektors (51), selbsttätig erfolgt.

8. Lenkverfahren eines Fahrzeugs (100), bei welchem sämtliche Räder (9, 12) des Fahrzeugs derart gelenkt werden, dass das Fahrzeug (100) während der Fahrt in eine Rotation um einen Drehpol (T), der sich mit einem Hauptbewegungsvektor (51) bewegt, versetzt wird und die Richtung des Hauptbewegungsvektors (51) des Drehpols (T) verändert wird, wobei die Position des Drehpols (T) relativ zur senkrechten Projektionsfläche des Fahrzeugs (100) verlagerbar ist, wobei eine Verlagerung der Position des Drehpols (T) relativ zu der Projektionsfläche des Fahrzeugs (100) isoliert angesteuert wird.

## Claims

1. A steering system for a vehicle (100), comprising at least two wheels (9, 12) which can be steered independently of each another and a steering setpoint generator which steers the wheels (9, 12) according to a steering program (L),
wherein an operating element (15) is provided by means of which during travel the vehicle (100) can be set in rotation about a center of rotation (T) which moves with a principal movement vector (51), and
the steering program (L) is configured in such a way that the direction of the principal movement vector (51) of the center of rotation (T) can be changed by means of the steering setpoint generator (19), wherein the position of the center of rotation (T) is displaceable relative to the perpendicular projection area of the vehicle, and wherein an operating element (15) or a function of an operating element (15) is provided, by means of which exclusively the position of the center of rotation (T) is displaceable relative to the projection area of the vehicle (100).

2. The steering system according to claim 1, **characterized in that** the displacement of the positions of the center of rotation (T) is sensitive to the surroundings, for example by optoelectronic detection of ambient marks by the steering system.

3. The steering system according to claim 1 or 2, **characterized in that the** center of rotation (T) is located inside the perpendicular projection area of the vehicle.

4. The steering system according to one of claims 1 to 3, **characterized in that** the angle of rotation about the center of rotation (T) is dependent upon the length of the principal movement vector (51).

5. The steering system according to claim 4, **characterized in that** the dependence between the angle of rotation about the center of rotation (T) and the length of the principal movement vector (51) is variable.

6. The steering system according to claim 5, **characterized in that** the dependence between the angle of rotation about the center of rotation (T) and the length of the principal movement vector (51) can be varied by the operating element (15).

7. The steering system according to claim 5 or 6, **characterized in that** the dependence between the angle of rotation about the center of rotation (T) and the length of the principal movement vector (51) occurs automatically in a manner sensitive to the surroundings, for example by optoelectronic detection of ambient marks by the steering system, a change of the principal movement vector (51) into consideration.

8. A method of steering a vehicle (100), wherein all the wheels (9, 12) of the vehicle are steered in such a way that during travel the vehicle (100) is set in rotation about a center of rotation (T) which moves with a principal movement vector (51), and the direction of the principal movement vector (51) of the center of rotation (T) is changed, wherein the position of the center of rotation (T) is displaceable relative to the perpendicular projection area of the vehicle (100), and wherein a displacement of the position of the center of rotation (T) relative to the projection area of the vehicle (100) is activated separately.

## Revendications

1. Système de direction destiné à un véhicule (100), comprenant au moins deux roues (9, 12) orientables de manière indépendante et un générateur de valeur de direction de consigne dirigeant les roues (9, 12) conformément à un programme de direction (L),
un élément de commande (15) étant prévu au moyen duquel le véhicule (100) peut être déplacé pendant le roulement selon une rotation autour d'un centre de rotation (T) qui se déplace avec un vecteur de mouvement principal (51), et
le programme de direction (L) étant conçu de telle sorte que la direction du vecteur de mouvement principal (51) du centre de rotation (T) peut être modifiée au moyen du générateur de valeur de consigne de direction (19), la position du centre de rotation (T) étant déplaçable par rapport à la surface de projection verticale du véhicule (100), un élément de commande (15) ou une fonction d'un élément de commande (15) étant prévu au moyen duquel ou de laquelle seule la position du centre de rotation (T) peut être déplacée par rapport à la surface de projection du véhicule (100).

2. Système de direction selon la revendication 1, **caractérisé en ce que** le déplacement des positions du centre de rotation (T) est effectué de façon sensible à l'environnement, par exemple par détection optoélectronique de repères d'environnement par le système de direction.

3. Système de direction selon la revendication 1 ou 2, **caractérisé en ce que** le centre de rotation (T) se situe intérieur de la surface de projection verticale du véhicule.

4. Système de direction selon l'une des revendications 1 à 3, **caractérisé en ce que** l'angle de rotation autour du centre de rotation (T) dépend de la longueur du vecteur de mouvement principal (51).

5. Système de direction selon la revendication 4, **caractérisé en ce que** la dépendance entre l'angle de rotation autour du centre de rotation (T) et la longueur du vecteur de mouvement principal (51) peut être modifiée.

6. Système de direction selon la revendication 5, **caractérisé en ce que** la dépendance entre l'angle de rotation autour du centre de rotation (T) et la longueur du vecteur de mouvement principal (51) peut être modifiée par l'élément de commande (15).

7. Système de direction selon la revendication 5 ou 6, **caractérisé en ce que** la dépendance entre l'angle de rotation autour du centre de rotation (T) et la longueur du vecteur de mouvement principal (51) est effectuée automatiquement de façon sensible à l'environnement, par exemple par détection optoélectronique de repère dans l'environnement par le système de direction, avec prise en compte de la variation du vecteur de mouvement principal (51).

8. Procédé de direction d'un véhicule (100), dans lequel toutes les roues (9, 12) du véhicule sont orientées de telle sorte que le véhicule (100) est déplacé pendant le roulement selon une rotation autour d'un centre de rotation (T) qui se déplace avec un vecteur principal de mouvement (51) et la direction du vecteur de mouvement principal (51) du centre de rotation (T), la position du centre de rotation (T) pouvant être déplacée par rapport à la surface de projection verticale du véhicule (100), un déplacement de la position du centre de rotation (T) est commandé isolément par rapport à la surface de projection du véhicule (100).
